# EUROPEAN PATENT APPLICATION

(11) **EP 2 793 438 A1**
(43) Date of publication of application: **22.10.2014**
(21) Application number: 13305491.6
(22) Date of filing: 16.04.2013
(51) Int. Cl.: H04L 25/497

(54) **Method and transmitter for encoding data**

(71) Applicant: ALCATEL LUCENT, 92100 Boulogne-Billancourt (FR)
(72) Inventor: Guenach, Mamoun, 1830 Machelen (BE); Kozicki, Bartlomiej, 2550 Kontich (BE)
(74) Representative: D'Halleweyn, Nele Veerle Trees Gertrudis

(57) **Abstract**

A method of encoding data as a sequence of symbol elements for transmission over a channel at a symbol rate, each individual symbol consisting of at least two symbol elements that are to be transmitted in consecutive time slots as defined by said symbol rate, the method comprising:
- obtaining a value representative of a bandwidth of said channel;
- selecting a set of coefficients such that a spectral extent of said symbols is substantially contained within said bandwidth of said channel;
- generating said symbol elements by multiplying symbols of said data by said set of coefficients, each coefficient determining the level of a respective symbol element of one of said symbols for a different one of said consecutive time slots; and
- transmitting said symbol elements over said channel.

## Description

The present invention pertains to the field of digital data communication, and in particular to the field of line coding.

### Background

Duobinary encoding is a known form of partial response encoding, which uses symbols whose spectral extent is narrower than that of the equivalent square pulse (as obtained by non-return to zero modulation), to limit the required amount of equalization when the symbols are transmitted through a bandwidth-limited channel.

It is a disadvantage of the duobinary encoding system that it is not optimal for transmissions at high symbol rates over narrowband channels. As a result, high levels of computationally expensive equalization are still required in such circumstances. Certain types of equalization, such as decision feedback equalization (DFE) cannot be used in practice at very high speeds.

### Summary

It is therefore an object of embodiments of the present invention to provide an encoding method and system that offer better performance at high symbol rates over a variety of bandwidth-limited channels.

According to an aspect of the present invention, there is provided a method of encoding data as a sequence of symbol elements for transmission over a channel at a symbol rate, each individual symbol consisting of at least two symbol elements that are to be transmitted in consecutive time slots as defined by the symbol rate, the method comprising: obtaining a value representative of a bandwidth of the channel; selecting a set of coefficients such that a spectral extent of the symbols is substantially contained within the bandwidth of the channel; generating the symbol elements by multiplying symbols of the data by the set of coefficients, each coefficient determining the level of a respective symbol element of one of the symbols for a different one of the consecutive time slots; and transmitting the symbol elements over the channel.

The term "level" is to be understood in the context of the transmission medium constituting the channel: for example, for an electromagnetic transmission line, the level may be a voltage; in another example, for an optical transmission line, the level may be a light intensity. The skilled person will appreciate that the concept of the invention also applies to other types of media. It should be noted that, although according to embodiments of the invention modifications are applied to the signal at the transmitter side, this is done with a view to influencing the levels of the signal as observed at the receiver side.

The term "contained within" is to be understood as meaning that the power spectral density of the symbols is primarily concentrated in those regions of the spectrum where the attenuation of the channel is the least severe. As a result of choosing the set of coefficients so as to ensure that the spectral extent of the symbols, as defined by their constituent symbol elements, is substantially contained within the bandwidth of the channel, a chosen set of symbols can be made to appear at the receiving end of the channel.

It is a first advantage of the method according to the present invention that it provides other, more advanced forms of partial response encoding than mere duobinary encoding. Thus, individual data symbols are divided in parts which are spread over two or more time slots, wherein a time slot is defined as a time with a duration equal to the inverse of the symbol rate (also referred to as a time unit). These parts are also referred to as "symbol elements" in this application. The symbols are transmitted at the symbol rate, i.e. transmission of a new symbol is commenced with each time slot, which implies that the first part of each transmitted symbol overlaps with one or more subsequent parts of one or more previously transmitted symbols and/or the last part of each transmitted symbol overlaps with one or more leading parts of the subsequently transmitted symbols.

It is a further advantage of the method according to the present invention that the actual channel is assessed before settling on the characteristics of the encoding to be used; these characteristics are defined by the set of coefficients that shape the symbols. Thus, the modulation can be optimized for the actually available channel, as opposed to an idealized model of said channel, and the amount of equalization can reduced.

By means of illustration, as will be appreciated by the skilled reader, a larger set of coefficients (i.e., a longer symbol duration) will be more appropriate for a channel with narrower bandwidth, and vice versa.

Embodiments of the invention thus allow obtaining a much higher signaling rate to channel bandwidth ratio than was previously possible.

It is known to use precoding to remove symbol interdependencies, such that the received signal can be decoded on a symbol-by-symbol basis. By combining partial response encoding (e.g., polybinary encoding) at the transmitter with a judicious choice of premultiplication coefficients, a variable part of the burden that normally falls upon the equalizer can be transferred to the detector at the receiver side.

In an embodiment of the method according to the present invention, the value representative of the bandwidth is derived from one of a measured impulse response and a measured transfer function.

These characteristics of the channel can be readily measured by known means, and such measurements provide the necessary information to determine an appropriate set of coefficients for the channel.

In a particular embodiment, the coefficients are further selected in such a way that the superpositions, expected downstream of the channel in any given time slot, of simultaneously received symbol elements of consecutive symbols for different transmitted symbol sequences are substantially equidistant, the expected superpositions being estimated with use of the measured impulse response or the measured transfer function.

The term "equidistant" signifies that the differences between the possible signal element levels, at the receiving end, are pairwise the same. It should be noted that, given a finite set of coefficients and a stationary channel, the set of achievable signal levels for different symbol sequences is also finite.

This embodiment is based on the insight of the inventors that the selection of a set of coefficients affects the pattern of superimposed symbol parts, i.e. the eye diagram, that can be expected to be received downstream of the channel.

As indicated above, the levels transmitted in any given timeslot are a combination of overlapping parts of neighboring data symbols. The convolution between the transmitted symbol elements and the channel's impulse response gives rise to further inter-symbol interference (ISI). By judiciously choosing the set of coefficients, taking into account the channel's impulse response, the different possible sums of received levels can be fixed at the desired levels according to any relevant criteria (e.g., the least number of output signal levels and/or symmetric decision boundaries). In particular, the output signal levels can be made to be at substantially equal distances, which in turn increases the ease and efficiency of the level detection.

In a particular embodiment, the transfer function is measured by transmitting a plurality of pilot tones over the channel and analyzing a signal received through the channel. In another particular embodiment, the impulse response is measured by transmitting a time domain pilot symbol over the channel and analyzing a signal received through the channel.

In an embodiment, the method according to the present invention further comprises selecting the symbol rate. In an embodiment, the method according to the present invention further comprises selecting a sampling phase.

It is an advantage of these embodiments that they leverage additional degrees of freedom. The symbol rate has a direct relationship with the spectral width of the transmit signal. Thus, the symbol rate may be tuned to vary the length of the response at the receiver and/or improve the "fit" of the spectral shape of the transmit signal to that of the channel transfer function. Likewise, a shift in sampling phase may be used to improve the match with the channel, as will be described in more detail below.

In an embodiment of the method according to the present invention, the data is precoded binary data. Precoding can be used to remove symbol interdependencies, such that the received signal can be decoded on a symbol-by-symbol basis. In an embodiment of the method according to the present invention, the data is level-shifted binary data (e.g., binary data represented by values of -1/2 and +1/2 instead of the traditional 0 and 1).

These techniques are used in duobinary and other polybinary encoding schemes, and lead to a set of receive symbols that can be detected with particular efficiency.

According to an aspect of the present invention, there is provided a computer program comprising code means to perform, when executed, any of the methods described above.

According to an aspect of the present invention, there is provided a digital data transmitter configured to perform any of the methods described above.

According to an aspect of the present invention, there is provided a communication system comprising at least one digital data transmitter as described above and at least one digital data receiver connected to the at least one digital data transmitter by the channel.

In a particular embodiment, the channel comprises a transmission line arranged in or on a backplane of a multi-board system.

The invention is of particular use in the context of backplanes, which need to support extremely high data rates over relatively narrowband channels, the characteristics of which may vary widely from one channel to the next, e.g. due to the characteristics of individual connectors and channel materials.

The technical effects and advantages of the computer programs, the digital data transmitters, and the communication systems according to embodiments of the present invention correspond *mutatis mutandis* to those of the corresponding methods according to embodiments of the present invention.

### Brief Description of the Figures

Some embodiments of apparatus and/or methods in accordance with embodiments of the present invention are now described, by way of example only, and with reference to the accompanying drawings, in which:
Figure 1 provides a flow chart of a general method according to an embodiment of the present invention;
Figure 2 illustrates an example of a modification of an equalizer to optimize the equivalent channel towards the selected partial response coding target, as performed in an embodiment of the method according to the present invention;
Figure 3 illustrates the performance gain that may be obtained by a method according to an embodiment of the present invention, relative to transmission using P-NRZ or duobinary encoding;
Figure 4 schematically illustrates modifying the sampling rate in an embodiment of the method according to the present invention;
Figure 5 schematically illustrates modifying the sampling phase in an embodiment of the method according to the present invention; and
Figure 6 provides a schematic illustration of a communication system according to an embodiment of the present invention.

### Description of Embodiments

According to the invention, symbol elements are generated by multiplying symbols of the data by a set of coefficients. Each coefficient determines the level of a respective symbol element of one of the symbols for a different one of the consecutive time slots over which the symbol is spread. The generation of symbol elements can happen at an equalizer, D/A-converter, or any other suitable component of a transmitter system that is capable of carrying out the required operations, which component may be generically termed a "premultiplication processor". Where the following description of exemplary embodiments of the invention assumes that the generation of symbol elements takes place at an equalizer in the transmitter system, this is done without loss of generality, as the skilled person will appreciate that other components may take the role of the premultiplication processor.

An equalizer may alternatively or additionally be placed at the receiver side of the channel.

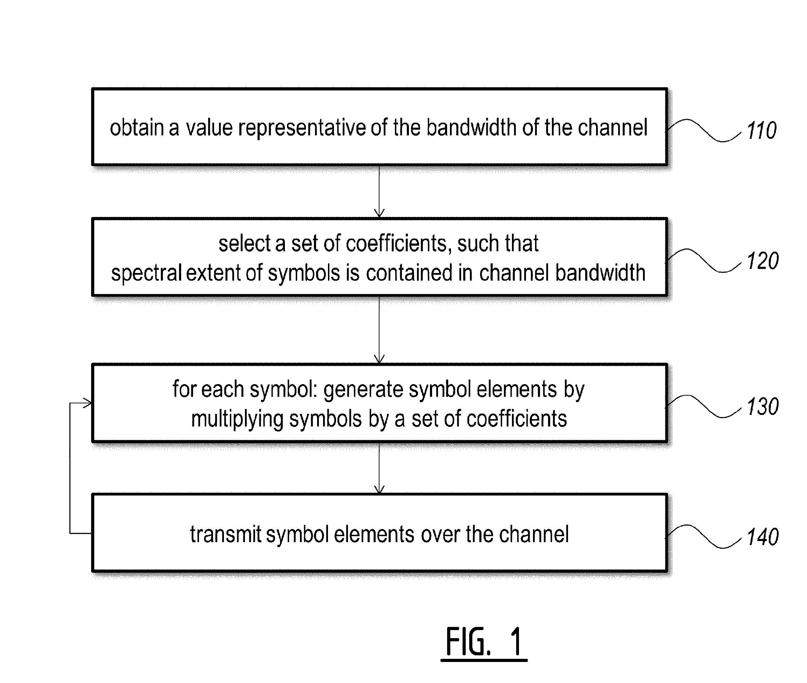

Figure 1 provides a flow chart of a method for encoding data according to an embodiment of the present invention. The data to be encoded consists of a sequence of symbols. As a particular preference, these symbols are binary digits.

In a first preliminary step **110,** a value representative of the bandwidth of the channel is obtained. This may be achieved by measuring the impulse response or the transfer function of the channel. The transfer function may for instance be measured indirectly by transmitting a number of pilot symbols (e.g., impulses) over the channel, which are received with a certain amount of attenuation and dispersion at the receiving end. The attenuation and dispersion of the individual pilot symbols may be used to obtain an estimate of the channel transfer function over the relevant spectrum.

The relevant "channel bandwidth" may be defined as that part of the spectrum in which the level of attenuation of the channel is below a certain threshold. Hence, it can easily be derived from the measured transfer function (or from the impulse response, which is its inverse Fourier-transformed counterpart). Typically, in the absence of reflections, attenuation rises in a monotonous fashion in function of frequency. In that case, for a given threshold (e.g., 20 dB), the bandwidth of the channel may be defined as the width of the frequency range in which the attenuation is below the threshold, i.e. the range from the relevant lower frequency bound to the frequency at which the attenuation reaches the threshold.

In a second preliminary step **120,** a set of coefficients for generating symbol elements is selected, in such a way that the spectral extent of symbols (transmitted as a sequence of symbol elements defined by said coefficients) is substantially contained within the channel bandwidth as determined in the first step **110.**

When the transmitter has obtained the set of coefficients, it is ready for transmitting symbols, premultiplied by these coefficients. Step **130** consists of generating symbol elements (i.e., partial symbols) by multiplying symbol values by each of the coefficients in the set. In this manner, a symbol is spread over several symbol time slot, one symbol element being transmitted **140** in each time slot, causing symbol overlap as described in more detail above.

By adequate selection of the coefficients, the symbols, as premultiplied in step **130** and further convolved with the channel impulse response, will result in a finite and preferably equidistant set of symbol element levels at the receiving end, which will greatly facilitate their decoding.

In one more particular embodiment, the process of target line code determination starts with estimation of the channel. The obtained impulse response allows determining the equalizer requirements which would constitute perfect equalization of the channel response. In perfect equalization, the goal is to obtain a flat frequency response of the convolved equalizer and channel, in view of non-partial response modulation. This determination can be realized via one of the techniques of zero forcing, least mean squares or one of their variants.

The result of equalization is then mapped onto the available equalizer specification, taking into account the length of the equalizing filter and the resolution with which the filtering can be applied. The difference between the real equivalent channel and the ideal equivalent channel constitutes an equalization error which manifests itself in uncontrolled ISI at the receiver for the original line coding target.

In order to alleviate the effect of uncontrolled ISI using the same equalizer budget (number of taps and tap resolution), a new line coding target with a controlled ISI pattern closest to the actually obtained response is identified. This can be done by using a look-up-table (with potential candidates prioritized according to certain criteria, such as the equalizer budget or the available SNR). The constraints that should be fulfilled when searching for potential line coding targets may include:
- the degree of sequence (memory) cannot exceed the complexity of the signal detection (and should be kept as low as possible); and/or
- a sum of at least one subset of coefficients equals the sum of at least one sum of other coefficients (which limits the number of signal levels.

The equalizer is then modified to optimize the equivalent channel towards the selected partial response coding target.

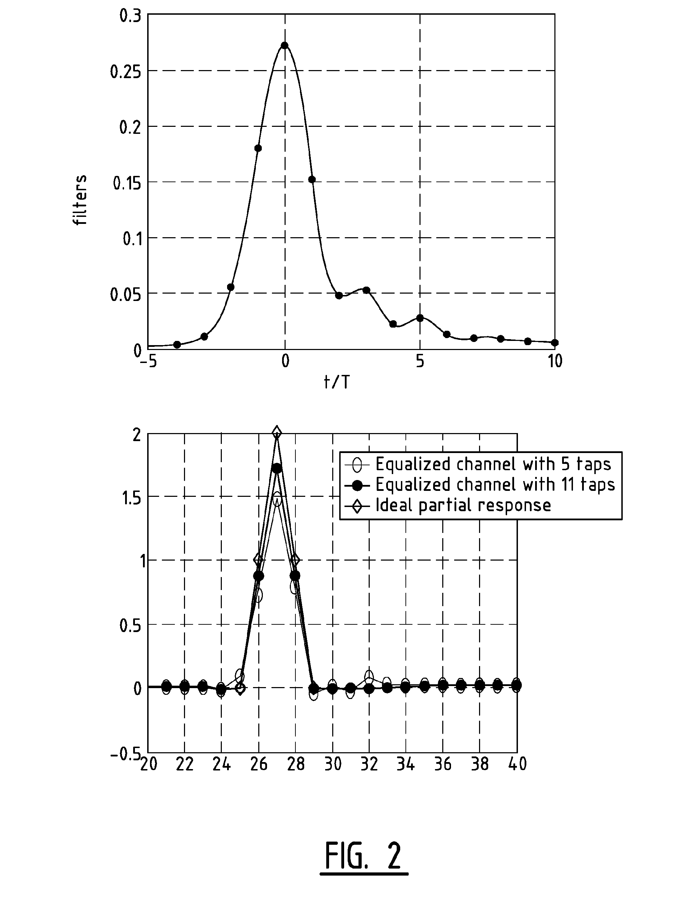

An example of such an optimization is shown in Figure 2. On the left-hand side, the impulse response of channel in question is shown. The response is longer than a single sample, leading to ISI in the received signal. The majority of power is concentrated in 3 samples on and around time t/T=0.

In general terms, it is desirable to set the taps of the premultiplication processor in such a way that the resulting equivalent channel resembles the right-hand side of Figure 2. The symmetry of the set is to be noted: the occurrence of pairwise equal coefficients leads to the (optionally) desired equidistant levels in the eye diagram at the receiver side.

To closely match the coding response to channel characteristic, filter values or coding coefficients (1,2,1) are selected, and all other coefficients are reset to "0", as indicated in the right hand figure (indicated with diamonds). Subsequently, the pre-multiplication processor's tap values are calculated such as to match the target coding response at the detector input, using one of the methods mentioned previously and within the capabilities of the available equalizer. An example of resultant equivalent channel is shown in the right-hand side of Figure 2 for both 5 and 11 equalizer taps. The imperfect equalization of a channel (including equalizer, passive channel and receiver designed for coding target) manifests itself in residual ISI, constituting reception error signal.

With the partial response signaling, the decision at the receiver may be performed on a symbol-by-symbol basis. However, since the equivalent channel introduces memory through the partial response coding target, decoding can be performed optimally using maximum-likelihood sequence detection (MLSD). Alternatively, one could for example consider maximizing minimum hamming distance of all possible sequences resulting from the optimized line coding. The skilled person will appreciate that other criteria may be applied to obtain the desired simplification of the decision process.

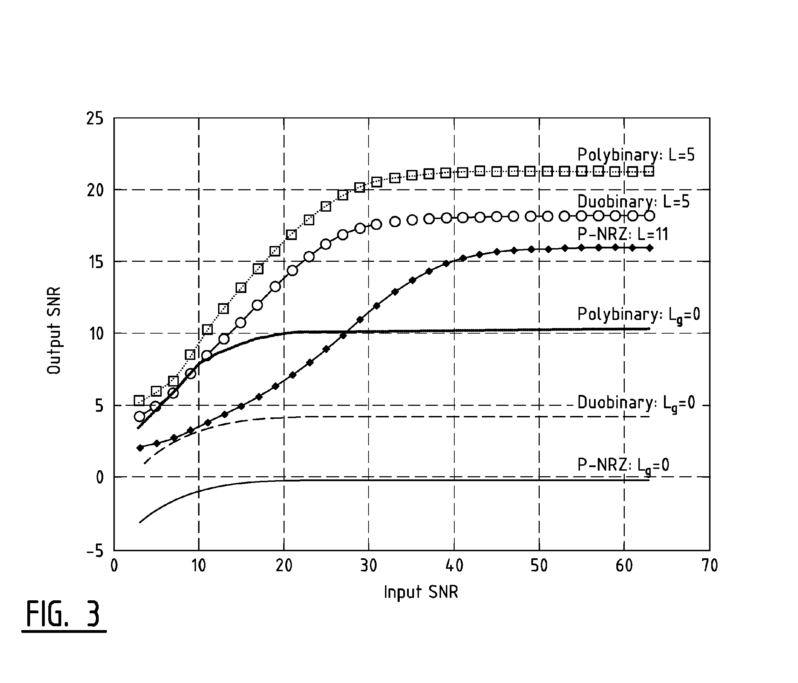

The performance gain obtained through the above-mentioned process is illustrated in Figure 3 with reference to the relevant signal to noise ratio (SNR) levels. Figure 3 plots output SNR (indicating the quality of the received signal) versus the input SNR. Plots are included for L_{g}=0 (no equalization) for different coding targets and 5 or 11 equalizer taps Lg for the assumed channel. The higher the SNR, the better the performance is (e.g., lower bit error ratio).

Partial response target coding outperforms the polar non-return to zero (P-NRZ) in terms of SNR as indicated in the plot. Also, the polybinary scheme (1,2,1) exhibits the lowest loss in terms of SNR across all schemes, with and without equalization, showing that the adjustment of the line coding target to the channel characteristic provides performance gains.

For each of the modulation schemes, increasing the number of taps Lg improves the output SNR for a given input SNR. The SNR flooring is also significantly improved. For instance, in the regions where all modulation formats exhibit an SNR floor, the SNR increase in dB for the three signaling schemes is summarized in the following table.

| P-NRZ | Duobinary (1+z⁻¹) | Polybinary (1+2z^{- 2}+z⁻¹) |
|---|---|---|
| SNR (L_{g}=11) / SNR (L_{g}=0) = 16 dB | SNR (L_{g}=5) / SNR (L_{g}=0) = 14 dB | SNR (L_{g}=5) / SNR (L_{g}=0) = 11 dB |

In another embodiment, the concept is generalized to further include modification of the transceiver symbol rate to address the optimum coding target. Considering a limited budget allocated to channel equalization, it may not be possible to equalize the channel impulse response to a sufficiently low number of coefficients to match one of the preferred coding targets. In this embodiment, the transceiver has the flexibility to change (in particular to reduce) the symbol rate. By doing so, it allows mapping the impulse response to a smaller number of coefficients so that the equalized channel can match one of a set of preferential coding targets. Alternatively, the transceiver may decide to increase the symbol rate, which will result in more coefficients of the channel. Hence, it becomes possible to more closely match one of the desired target line coding instances with less equalization effort.

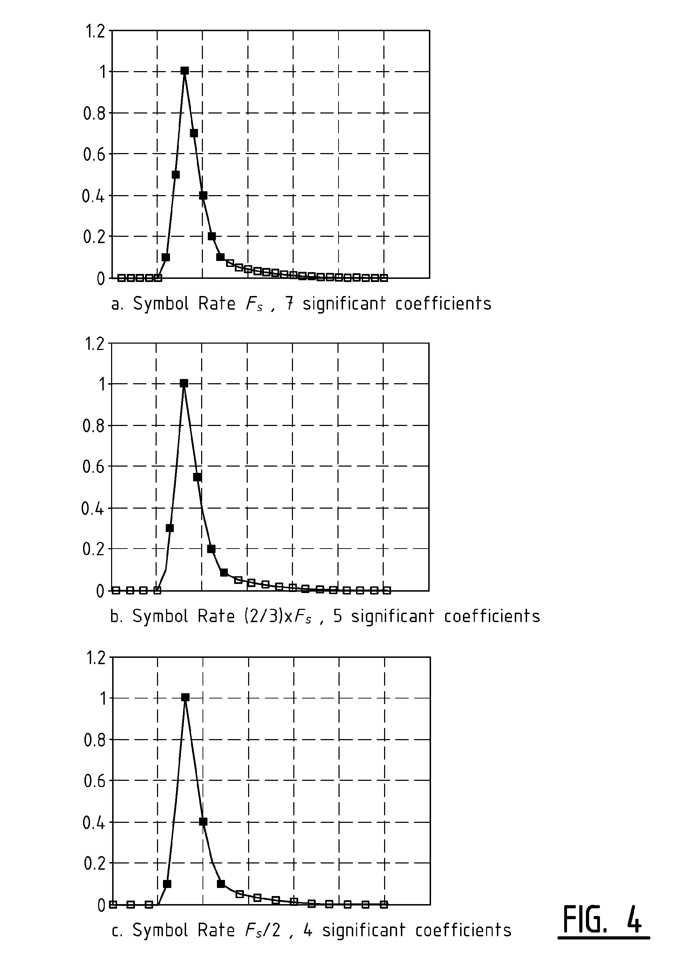

In diagrams a-c of Figure 4, the solid line represents the impulse response of an exemplary available channel. The markers represent the time instants (sampling instants) at symbol rate *F_{S}*. Black markers represent sample values with energy contributing to the target response. In diagram a, the impulse response is considered at the symbol rate *F_{S}*. The symbol is spread in time by using 7 significant coefficients. In diagram b, the impulse response is considered at a rate of 2/3 × *F_{S}*. The symbol is spread in time by using 5 significant coefficients. In diagram c, the impulse response is considered at a rate of 1/2 × *F_{S}*. The symbol is spread in time by using 4 significant coefficients.

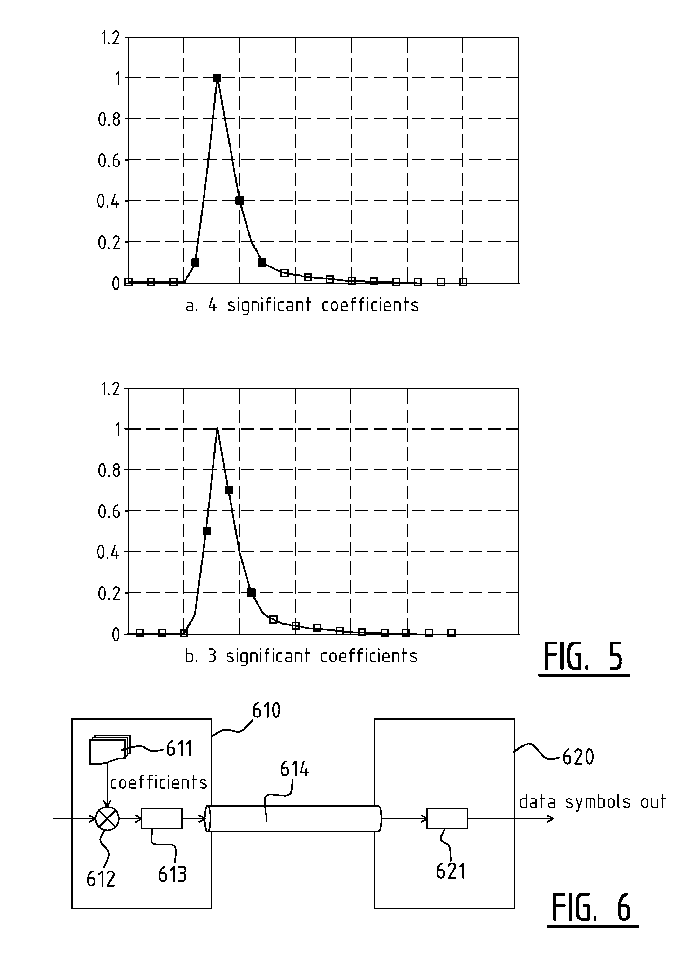

In a further generalization of the previous embodiment, the sampling phase for a given symbol rate can also be modified. An example is indicated in Figure 5, where the sampling phase is modified to reduce the number of significant contributing coefficients. Indeed, it can be seen that in diagram a, the impulse response has non-negligible energy in 4 samples, whereas in the phase-shifted diagram b, there are only 3 significant coefficients.

In another embodiment, the equalization toward reaching the coding target may take into account suppression of crosstalk from the neighboring channels by adjusting the coding target, employing multichannel pre and/or post-equalization and employing e.g. maximum likelihood sequence detection. Figure 6 provides a schematic illustration of a communication system according to an embodiment of the present invention. The system comprises a digital data transmitter **610** and a digital data receiver **620,** connected to each other by a channel. The channel consists of the actual physical transmission line **614** including any connectors.

The operation of the digital data transmitter **610** is fully in accordance with the method according to the present invention, which will not be repeated in detail.

The digital data transmitter **610** receives the symbols to be transmitted via an interface (illustrated as an incoming arrow), and provides them to a pre-multiplication processor (schematically illustrated as a memory containing coefficients **611** and a generic multiplier **612**). The output of the pre-multiplication processor consists of a stream of symbol elements, which are transmitted over the channel, optionally via an additional transmitter-side equalizer **613** (it shall be clear to the skilled reader that an equalizer may alternatively or additionally be placed at the receiver side of the transmission line **614**).

At the receiving end, the digital data receiver **620** comprises a detector **621** configured to reconstruct the data symbols, which is facilitated by the fact that the symbol element levels are finite in number and preferably equidistant. The detected data symbols are forwarded to an appropriate interface.

The term "interface" designates the necessary hardware and software required to establish data communication connectivity across the various layers of the protocol stack, as is well known to a person skilled in the art. Preferably, standardized protocols are used.

Although methods and apparatus have been described hereinabove as separate embodiments, this is done for clarity purposes only, and it should be noted that features described only in connection with method embodiments may be applied in the apparatus according to the present invention to obtain the same technical effects and advantages, and vice versa.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method of encoding data as a sequence of symbol elements for transmission over a channel at a symbol rate, each individual symbol consisting of at least two symbol elements that are to be transmitted in consecutive time slots as defined by said symbol rate, the method comprising:
- obtaining a value representative of a bandwidth of said channel;
- selecting a set of coefficients such that a spectral extent of said symbols is substantially contained within said bandwidth of said channel;
- generating said symbol elements by multiplying symbols of said data by said set of coefficients, each coefficient determining the level of a respective symbol element of one of said symbols for a different one of said consecutive time slots; and
- transmitting said symbol elements over said channel.

2. The method according to claim 1, wherein said value representative of said bandwidth is derived from one of a measured impulse response and a measured transfer function.

3. The method according to claim 2, wherein said coefficients are further selected in such a way that the superpositions, expected downstream of said channel in any given time slot, of simultaneously received symbol elements of consecutive symbols for different transmitted symbol sequences are substantially equidistant, said expected superpositions being estimated with use of said measured impulse response or said measured transfer function.

4. The method according to claim 2 or claim 3, wherein said transfer function is measured by transmitting a plurality of pilot tones over said channel and analyzing a signal received through said channel.

5. The method according to claim 2 or claim 3, wherein said impulse response is measured by transmitting a time domain pilot symbol over said channel and analyzing a signal received through said channel.

6. The method according to any of the preceding claims, further comprising selecting said symbol rate.

7. The method according to any of the preceding claims, further comprising selecting a sampling phase.

8. The method according to any of the preceding claims, wherein said data is precoded binary data.

9. The method according to any of the preceding claims, wherein said data is level-shifted binary data.

10. A computer program comprising code means to perform, when executed, the method of any of the preceding claims.

11. A digital data transmitter configured to perform the method according to any of claims 1-7.

12. A communication system comprising at least one digital data transmitter according to the preceding claim and at least one digital data receiver connected to said at least one digital data transmitter by said channel.

13. The communication system according to the preceding claim, wherein said channel comprises a transmission line arranged in or on a backplane of a multi-board system.
